Europäisches Patentamt

European Patent Office

Office européen des brevets

(11) Publication number: 0 666 164 A2

# EUROPEAN PATENT APPLICATION

(21) Application number: 95100487.8

(22) Date of filing: 16.01.95

(51) Int. Cl.⁶: B29C 67/00

(30) Priority: 04.02.94 US 191688

(43) Date of publication of application:
09.08.95 Bulletin 95/32

(84) Designated Contracting States:
DE FR GB

(71) Applicant: STRATASYS Inc.
14950 Martin Drive
Eden Prairie, MN 55344-2020 (US)

(72) Inventor: Abrams, Steven R.
454 Riverside Drive,
Apt. 5-c
New York,
New York 10027 (US)
Inventor: Batchelder, John Sam
2 Campbell Drive
Somers,
New York 10589 (US)
Inventor: Farouki, Rida Taji
80 Amber Drive
Croton-on-Hudson,
New York 10520 (US)
Inventor: Korein, James Urey
8 Berry Brook Circle
Chappaqua,

New York 10514 (US)
Inventor: Korein, Jonathan David
157 Fernbrook Avenue
Wyncote,
Pennsylvania 19095 (US)
Inventor: Mackay, John DaCosta
115 Jane Street
Hartsdale,
New York 10530 (US)
Inventor: Ryan, Christopher John
5 Autumnleaf Drive, 21
Nashua,
New Hampshire 03060 (US)
Inventor: Srinivasan, Vijay
64 Putnam Road
Peekskill,
New York 10566 (US)
Inventor: Tarabanis, Kostantinos Athanasios
144-38 25 Drive
Flushing,
New York 11354 (US)

(74) Representative: Waxweiler, Jean et al
Dennemeyer & Associates Sàrl
P.O. Box 1502
L-1015 Luxembourg (LU)

(54) A part fabrication method.

(57) A part fabrication method comprising continuous extrusion (24). The method includes steps of constructing at least a portion of a part (30) by successively augmenting a base member by applying new material to the base member; and applying the new material to the base member according to a predetermined design such that a moment induced by a directed force is substantially resisted by adhesion of the new material to the base member.

FIG. 3

## Background of the Invention

This invention relates to a novel method suitable for fabricating a part in accordance with rapid prototyping techniques.

## Introduction to the Invention

Rapid prototyping techniques can provide a capability for building three-dimensional objects or parts directly from computer aided design (CAD) models.

This capability introduces a significantly enhanced flexibility in current manufacturing processes. For example, manufacturing processes that involve a design, redesign, prototyping or production of three-dimensional models, molds or patterns, may now be efficiently realized in a matter of hours or days, not months, thereby obviating slower, more complex and expensive manual machining techniques. Reference may be made for example to U.S. Patents Nos. 5,141,680, 5,137,662, 5,121,329, and 4,749,347.

## Summary of the Invention

One motivation for our providing a novel part fabrication method comes about with reference to a problem of providing support while fabricating a part.

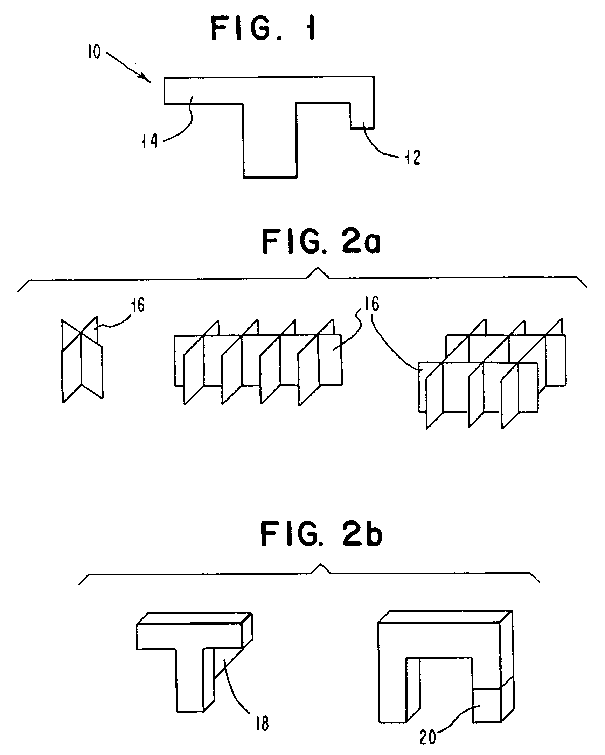

In particular, an important and common feature of rapid prototyping technologies is that objects or parts are typically fabricated in horizontal layers, from the bottom or ground, up. At any one moment of time during this horizontal part layer process, as illustratively shown in Figure 1, a part 10 may have an unsupported portion, for example, an unsupported portion comprising an "icicle" or a "stalactite" type geometry 12, which unsupported portion corresponds to a local minimum in the vertical (gravitational) direction. In addition, there may be an overhang 14 which is not supported from below. It is known that such a gravitationally unstable structure may collapse, unless a temporary support means can be provided in order to support an unsupported portion, at least until the part can somehow become self-supporting.

A number of methods have been used (or proposed for use) to provide a requisite support means. For example, one method disclosed in U.S. Patent No. 4,999,143 provides actual building supports, such as web supports. Figure 2 shows various web supports 16, and other exemplary supports 18, 20. Commercial products available for support purposes also include software packages, for example of the type available from Solid Concepts (Valencia, California) entitled Bridge Works, and Magics 2.1 Short Guide for Demo Version (Leuvun, Belgium 1991).

We have analyzed several of these various support means, and assayed their relative advantages and disadvantages. On a comparative basis, we have determined that one support means may take relatively more or less time to build than another such support means; that one support means may require relatively more or less of a substantial effort in order to be removed from the part, and without serious damage to an underlying part; or that one support means may more or less unduly qualify or limit part design in terms of its flexibility or innovation.

Based on this analysis, we conclude that it is desirable to build as few supports as is possible; that those built should preferably use the smallest amount of material possible; and, that contact with the supported part preferably should be minimized.

As alluded to above, one motivation for our providing a novel part fabrication method may be referenced to this problem of a viable support means. However, we have addressed the problem in an entirely different conceptual way from the prior art, in favor of a part fabrication method that can provide a self-supporting capability for a large class of geometries, and greatly reduce the amount of support structure required for others.

Accordingly, we now disclose a novel part fabrication method comprising continuous extrusion, the method comprising the steps of:

(1) constructing at least a portion of a part by successively

augmenting a base member by applying new material to the base member; and

(2) applying the new material to the base member according to

a predetermined design such that a moment (e.g. torque) induced by a directed force is substantially resisted by adhesion of the new material to the base member.

The novel method can realize important advantages.

For example, by exploiting the properties of adhesion in the manner defined by the method, it is possible to substantially reduce, and in some cases, to completely eliminate the need for a traditional support means. An exemplary such case includes geometries that comprise an overhang.

A correlate advantage of the novel method is that less support means reduces a requirement for post processing of a part, thereby also reducing overall fabrication time.

The novel method, moreover, has a reflexive utility, since it can be advantageously employed for fabricating a required support structure itself. For example, a part comprising a stalactite type geometry or a large overhang geometry (e.g., an overhang greater than 12mm), can be advantageously supported through implementation of the novel method.

## Brief Description of the Drawing

The invention is illustrated in the accompanying drawing, in which

FIG. 1 illustrates a part comprising unsupported portions;

FIG. 2 shows exemplary external part supports;

FIG. 3 shows key features of an extrusion apparatus suitable for realizing the present invention;

FIG. 4 shows a part developed in accordance with a preferred embodiment of the present invention;

FIG. 5 shows a slice (i) of a part developed in accordance with the present invention;

FIG 6 shows a slice (i - 1) of a part developed in accordance with the present invention;

FIG. 7 shows a slice (i + 1) of a part developed in accordance with the present invention;

FIGS. 8(a-c) illustrate an aspect of a path generation procedure employed in a preferred embodiment of the present invention;

FIGS. 9(a-d) show open curve offsets;

FIG. 10 illustrates a boundary region path that needs to be supported;

and

FIGS. 11 and 12 illustrate fill path examples.

## Detailed Description of the Invention

### Definitions and Examples

The present invention is summarized above. We first set forth the following definitions and examples of words or phrases that are abstracted from the summarized invention, or may be used to reference preferred embodiments of the invention.

A "part" may reference any physical component or model, including a mechanical component, a toy, a medical prosthetic, or an architectural model, et cetera. It may also reference any portion or subcomponent of a part. It may further reference a support structure which may be built for the purpose of supporting a part, as well as a support structure in combination with some other subcomponent.

The phrase "part fabrication method using continuous extrusion" denotes a technique for fabricating parts in which material is preferably extruded from a nozzle to form a solid part, and for which extruded material is preferably in contact with either the nozzle or a base member.

The phrase "base member" denotes a portion of a part which has already been constructed, or any other solid object residing in, or adjacent to, a work space where a part may be constructed.

The phrase "new material" denotes material which is in the process of being added to a base member.

The phrase "material applied according to a predetermined design" denotes material which is applied so as to have a particular geometric or physical relationship with a base member or with previously applied material.

The phrase "directed force" denotes a force such as gravity, that acts in a particular direction. Another example of "directed force" is that of a viscous drag such as wind. Another example is an elastic tension generated by the extrusion process.

The phrase "moment induced by directed force" references a situation wherein, for any contiguous quantity of material which is in contact with a base member, there is a moment induced by a directed force such as gravity.

The phrase "substantial resistance to a moment" denotes resistance which is sufficient to prevent more than a small displacement of the object of the moment from a position in which it is originally intended. For this purpose, a small displacement may be defined as one smaller than a diameter of an extruded material.

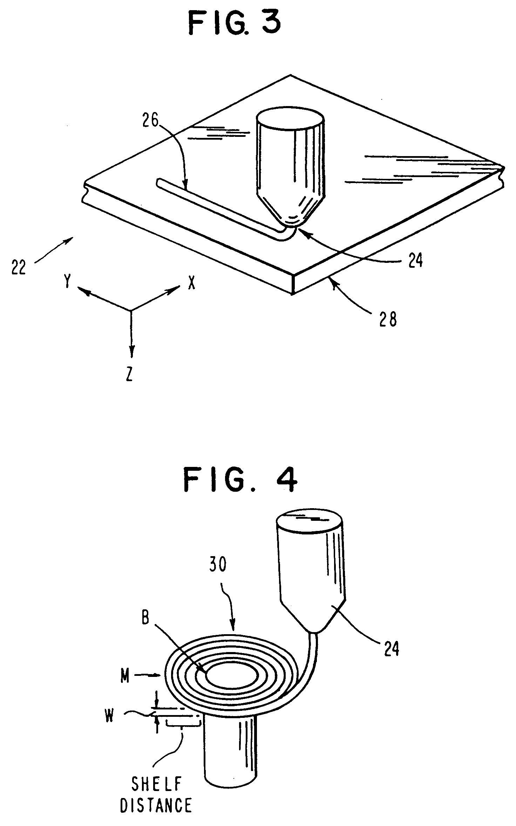

The phrase "shelf distance" denotes a maximum horizontal distance one can shelve out, without significant vertical sag (see Figure 4). For this purpose, significant sag may be defined as sag of greater than a diameter of an extruded material.

### Preferred Embodiments: Apparatus, Materials and Algorithms

The steps of the method of the present invention are preferably realized in conjunction with extrusion apparatus, materials and computational algorithms, now to be disclosed.

Attention is first directed to Fig. 3, which shows key features of an extrusion apparatus 22 suitable for realizing the present method. In overview, the extrusion apparatus 22 has a utility for producing a three-dimensional prototype part from computer aided design data, by controlling the position of a small nozzle 24, preferably from which flows a molten thermal plastic or a similar self-adhesive material 26.

In particular, software may be used (in a known way) to create thin, preferably horizontal cross-sections from a CAD solid model, which is preferably used to control the position of the small nozzle 24 as it moves in corresponding x-y planes. The molten thermal plastic or similar self-adhesive material 26 may be extruded from the nozzle 24, as it moves, thereby physically reproducing the layer represented by the CAD model. A rate of extrusion is preferably controlled to match the speed of the nozzle 24, and turned on and off when required.

When a first layer is completed, the nozzle 24 may be raised by the thickness of the layer just completed relative to a stage 28 on which the part rests, by an amount which preferably corresponds to a diameter of the nozzle 24 and resulting extruded bead. This process may be repeated for a second and succeeding layers, until the prototype part is complete. Note that layers need not be of the same thickness, or of uniform thickness.

As just established, the Fig. 3 extrusion apparatus 22 has a general utility for realizing the steps of the present method. Since the present method has further limitations and requirements of realizability, namely, the recital of constructing at least a portion of an arbitrary part by successively augmenting a base member by applying new material to the base, in accordance with a predetermined design, we now turn to preferred computational algorithms that are useful for realizing these further limitations.

In particular, the method limitations preferably require a subsumed step of specifying an appropriate path generation procedure, to thereby generate a path for the nozzle 24 to fill a (typically) planar layer. In a preferred embodiment now to be disclosed and shown in FIGURE 4, it is assumed that a layer is filled with a bead of material with a preferably constant width, W. In this way, accordingly, a part 30, can in fact, be successively augmented.

In overview, a path to be generated preferably satisfies two unique conditions, in order for it be appropriate for the hardware technology that is used. The first condition is that a path must be such that any point in a region can be covered by the path of the nozzle 24 exactly once while it is depositing material i.e., the single-pass condition. This single-pass condition guarantees that there are no unfilled or overfilled portions of a layer. The second condition is that the path must comprise segments which are entirely supported from below, or are shelves or bridges i.e., the support condition.

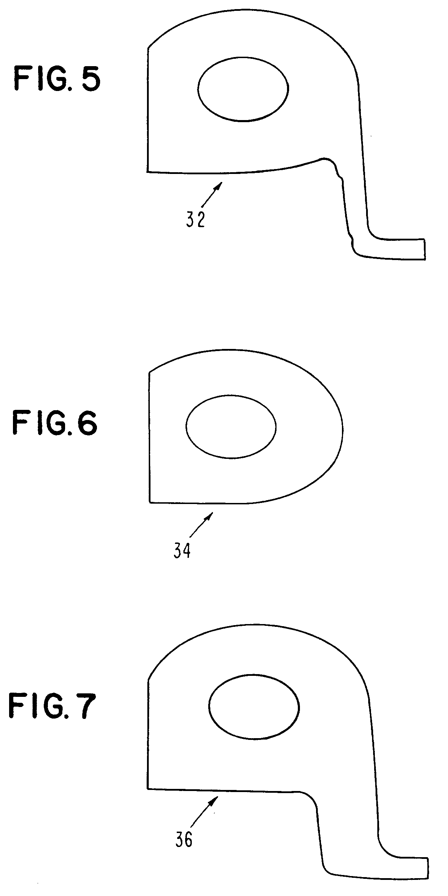

Preferably, there are three inputs to a path generation procedure. The first input comprises a part layer $L_i$, represented as a set of non-intersecting simple closed curve boundaries (see Figure 5, numeral 32). Here, each boundary comprises line segments and possibly circular arcs. The second input comprises a layer below, $L_{i-1}$ (see Figure 6, numeral 34) and a layer above, $L_{i+1}$ (see Figure 7, numeral 36). The third input comprises a bead width, w.

An output from the path generation procedure comprises an ordered list of curves which fill (i.e., cover) the layer $L_i$. These paths may be open or closed curves; each preferably comprises straight line segments and circular arcs. The paths in the list are called $P_j$. The order of the paths is such that each is supported in some way, when it is built. Each path $P_j$ is labelled with one of the following tags:

Supported - the path is supported from below.

Shelved - the path is not supported from below, but shelves out from a previously laid adjacent bead.

Bridged - the path bridges from one supported point to another, and must be constructed under tension.

A first step of the path generation procedure partitions a layer to be filled into several distinct regions, each of which may be filled using a different strategy, depending on how it is supported and upon aesthetic requirements. This portion of the procedure may be described in accordance with the following set of instructions:

1. Compute a boundary region B of layer $L_i$ which is a portion of $L_i$ that lies within a small distance $d_b$ of the boundary. This region is important for the appearance (i.e., a look and feel) of the part, and greater care is preferably exercised in its filling (e.g., a slower movement of the nozzle 24). Let the remaining portion of $L_i$ be called $L_{\bar{i}}$.

2. Determine a supported region S of $L_i$ which is a portion of $L_{\bar{i}}$ that is supported by the layer $L_{i-1}$ below.

3. Determine an unsupported region U of $L_{\bar{i}}$ which is the portion of $L_{\bar{i}}$ that is not supported by the layer $L_{i-1}$ below.

Once the layer $L_i$ is partitioned, preferably it is filled using one of the following three techniques.

1. Zig-zag - the region is filled with parallel adjacent line
    segments (axis parallel filling).

2. Closed curve offsets - the region is filled with offset curves from the entire boundary of the region to be filled (contour parallel filling). Each offset is a fixed distance inward from its predecessor. The process continues until the region is filled.

3. Open curve offsets - An open segment of the boundary is marked for offset. Offsets are computed only from this portion of the boundary. At each iteration, the result of the previous offset is again offset by the bead diameter w and the resulting offset is clipped to the region to be filled.

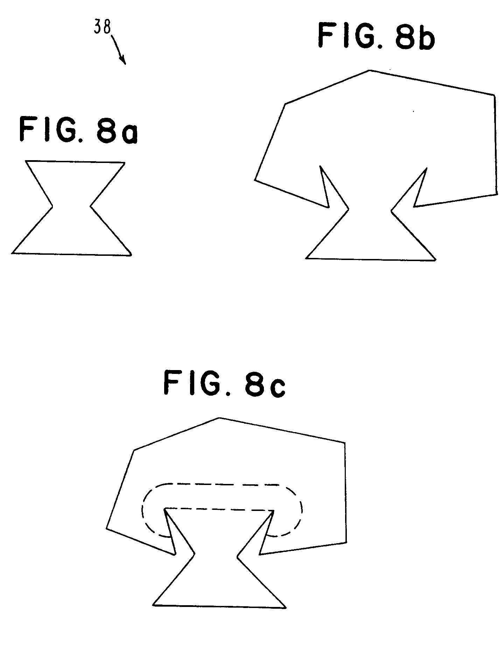

The order in filling the regions of $L_i$ is obviously important for satisfying the support condition. S is filled first, followed by U and then B. It is of note that the computed paths satisfy the single-pass and support conditions only approximately. The violations of these conditions are discussed in the following three sections and with reference to FIG. 8 (numeral 38).

## I. Path Generation for the Supported Region

Of the three regions into which $L_i$ is partitioned, the first region preferably to be filled is the supported region S. S can be filled using any of the above techniques, since the support condition is automatically met. For example, closed curve offsets or zig-zags can be used.

### Zig-zagging the Supported Region

Zig-zagging procedures are known and widely used for filling regions with pen plotters, and for clearing regions in numerically controlled machine tools.

### Filling the Supported Region with Closed Curve Offsets

Generally, offsets are often computed for the purpose of clearing material in numerically controlled machine tools. See, for example, the reference M. Held. On the Computational Geometry of Pocket Machining, Springer-Verlog, New York, 1991, and incorporated by reference herein. When using closed curve offsets to fill the supported region, the entire boundary of S (i.e, all loops) is preferably successively offset by one half bead width (w), and then by integer multiples of the bead width w (i.e., $\frac{w}{2}$, $\frac{3}{2}w$, $\frac{5}{2}w$, etc.).

By computing offsets of the entire boundary of S, the resulting paths are closed and do not intersect the boundary of the S. If only a certain set of closed loops were to be chosen for offsetting, then the resulting offsets would need to be clipped to the region to be filled.

### Limitations in Filling the Supported Region

As described, both the zig-zag and the offset paths only approximately satisfy the single-pass condition stated earlier.

In particular, certain points are not filled because paths of width w cannot fit (void). Also, certain points are filled multiple times because local self-interference of a path is not checked (overfill).

To reduce the size of the voids, filling with fractional bead widths, up to some minimum bead diameter, preferably is currently employed. As for the overfilled portions, these are currently permitted. One relies on the shape conforming property and porosity of the filling material in order to accommodate this situation.

## II. Path Generation for the Unsupported Region

After filling the supported region S, paths are generated for the unsupported region U. In addition to the single-pass condition, the unsupported region U needs to be filled so as to satisfy the support condition as well. For this, the techniques of shelving and bridging preferably are employed. The procedure to fill U employs closed and open curve offsets and includes the following steps.

### Unsupported Fill Algorithm

Input: U
Output: Fill paths for U and the set of segments j of the boundary of U that need to be supported by external supports.
For each connected component u of U do:
Let $\gamma$ be the common boundary between S and u.
If $\gamma$ is null then
- Support the boundary of u with external support.
- Build the boundary of u on top of external supports. - Fill u with closed curve offsets of its boundary.
else
- Fill u with open curve offsets of $\gamma$.
- If the resulting number of offsets exceeds that corresponding to the shelf distance
  * Delete the open curve offsets.
  * Fill u as in the case of $\gamma$ being null.

In filling U by either closed or open curve offsets, the paths are preferably ordered (shelved) from the boundary to its interior, in order to satisfy the support criterion.

The offset of an open curve, as appropriate to our purposes, may be defined as the union of the offset to its interior and the offsets to its two endpoints. By the offset to the interior (i.e., the curve without its endpoints) we mean the offset to the curve at distance w as usually defined in the CAD context (see, for example, Farouki & Neff, 1990, R.T. Farouki and C.A. Neff, Analytic properties of plane offset curves, Computer Aided Geometric Design 7, 83-99 (1990)). By the offsets to the endpoints we mean circular arcs of radius w centered on those points that connect the ends of the interior offset to the open curve itself. For example, in Figure 8c an open wire offset is shown clipped to the region to be filled. Such a definition of an open curve offset is appropriate for the technique of shelving and enables the closed region to be completely filled by open curve offsets of a subset of its boundary.

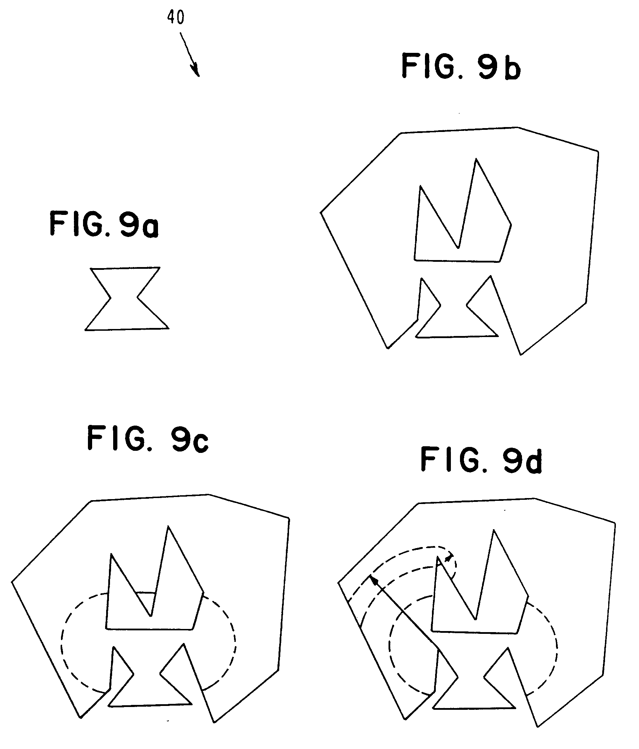

When computing closed curve offsets it is possible to compute the ith offset by either offsetting the original boundary curve by i x w or equivalently by offsetting the (i - 1)st offset curve by w. To avoid accumulation of numerical error the first computation is chosen in the case of closed curve offsets. However, in the case of open curve offsets these two computations are not equivalent due to the intervening clipping operation. In order to satisfy the support criterion the latter computation must be used in the case of open curve offsets. Thus, each open curve offset is computed from its predecessor rather than from the original boundary curve (see Figure 9, numeral 40).

III. Path Generation for the Boundary Region

The last region of $L_i$ to be filled is the boundary region B. This region comprises a certain number of closed curve offsets of the boundary of $L_i$. At the time the boundary region is to be filled, both the supported and the unsupported regions have already been deposited. Consequently, any boundary region path segment adjacent to either a supported or unsupported region path segment satisfies the support condition, since it can be shelved. However, there are two cases where boundary region path segments are not adjacent to any supported or unsupported region path segments:

1. there are no supported or unsupported region paths globally in the face.

For example, a face of a slice may be small and thus may be totally filled by the boundary region paths. All or certain segments of these paths may not lie over the previous layer, thus requiring external supports.

2. there are no supported or unsupported region paths locally in the vicinity of certain boundary region path segments.

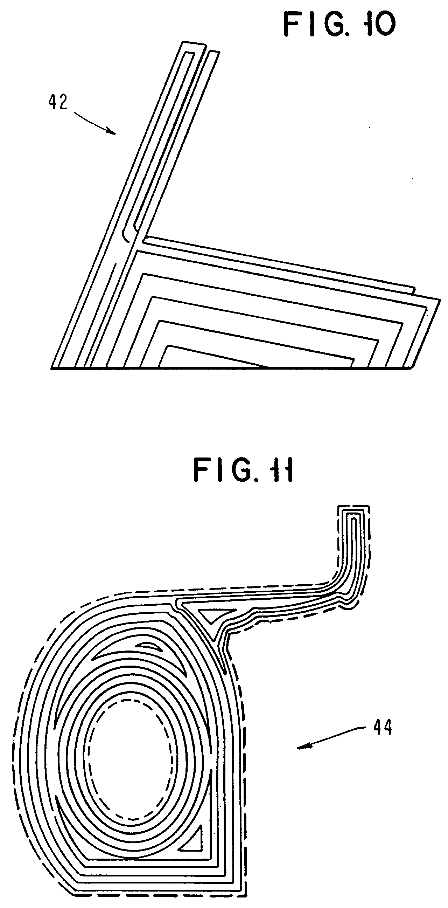

For example, in certain narrow portions of a region, a boundary region path may be adjacent to itself rather than to any supported or unsupported region path segments (see Figure 10, numeral 42).

In such cases, the support condition may be violated, and external supports are required for the unsupported segments of the boundary region paths.

The first case (i.e., where there are no supported or unsupported region paths globally in the face) can be identified readily. The unsupported segments of the boundary region paths are determined as the result of subtracting the previous layer from the boundary region paths of the current layer.

For the second case, the unsupported segments of the boundary region paths may be determined as follows:

1. Determine the portion $\hat{L}_i$ of $L_i$ that was covered when filling S and U.

2. Compute $\hat{L}_i$ by offsetting the boundary of $\hat{L}_i$ by the number of boundary layer offsets.

3. If the area of $\hat{L}_i$ is appreciably smaller than the area of the current layer $L_i$ then:

(a) Subtract $\hat{L}_i$ from the boundary region paths yielding $N_i$, the segments of boundary region paths that are not adjacent to any supported or unsupported path.

(b) Determine the unsupported portion $N_i^u$ of $N_i$ by subtracting the previous layer $L_{i-1}$ from $N_i$.

(c) Support $N_i^u$ with external supports.

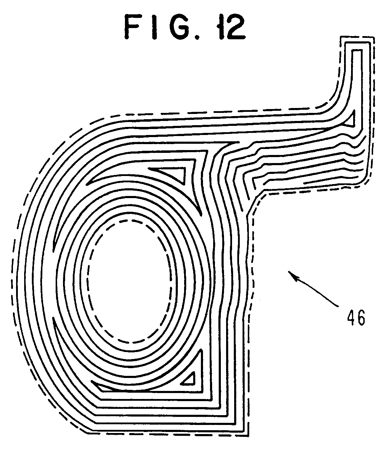

Fill path examples are shown in Figure 11 (numeral 44) and Figure 12 (numeral 46).

Preferred embodiment: Use of shelving in generating supports

As described above, a valuable application of shelving is in the construction of supports. When it is determined that some region of a part must be supported, as in the case of region M shown in Figure 4, a support may be built as follows:

1. Compute a set of offset curves to fill region M.

2. Let the first offset curve generated be $O_1$ and the last $O_n$.

3. Choose one or more contiguous offset curves and call them B, the base of M. For simplicity, we usually choose $O_n, O_{n-1}, ...$

The support comprises a cylinder whose cross section is the shape of B, extending to the next underlying surface. This may be constructed by translating multiple copies of B downward. If the underlying surface is not horizontal, it may be necessary to clip some layers to accommodate it.

Since region M comprises a set of contiguous offsets, they may all be constructed by shelving from B, which is directly supported.

**Claims**

1. A part fabrication method comprising continuous extrusion (22), the method comprising the steps of:

(a) constructing at least a portion of a part by successively augmenting a base member (28) by applying new material (26) to the base member; and

(b) applying the new material to the base member according to a predetermined design such that a moment (e.g. torque) induced by a directed force is substantially resisted by adhesion of the new material to the base member.

2. The method according to Claim 1, wherein step (a) comprises applying new material to the base member by tracing a generated extrusion path.

3. The method according to Claim 2, comprising the step of generating said extrusion path so that the path comprises segments which are entirely supported from below or are shelves.

4. The method according to any one of Claims 1 to 3, wherein the base member comprises a molten thermal plastic.

5. The method according to any one of the preceding Claims, wherein the new material comprises a molten thermal plastic.

6. The method according to any one of the preceding claims wherein the directed force is gravity.

7. The method according to any one of the preceding Claims wherein the moment induced by the directed force is resisted solely by adhesion.

# FIG. 1

# FIG. 2a

# FIG. 2b

# FIG. 3

# FIG. 4

SHELF DISTANCE

FIG. 5

32

FIG. 6

34

FIG. 7

36

38

FIG. 8b

FIG. 8a

FIG. 8c

40

FIG. 9b

FIG. 9a

FIG. 9c

FIG. 9d

# FIG. 10

42

# FIG. 11

44

# FIG. 12

46